# FASCICULE DE BREVET EUROPEEN

(11) **EP 2 089 622 B1**
(45) Date de publication et mention de la délivrance du brevet: **09.02.2011**
(21) Numéro de dépôt: 07857245.0
(22) Date de dépôt: 04.12.2007
(51) Int. Cl.: F02D 41/00, F02D 41/02

(54) **PROCEDE DE LIMITATION DE BRUIT D'ADMISSION D'AIR PRODUIT A LA FIN DE LA REGENERATION DU SYSTEME DE POST-TRAITEMENT DES GAZ D'ECHAPPEMENT**
VERFAHREN ZUR MINDERUNG DES ANSAUGLUFTGERÄUSCHES AM ENDE DER REGENERIERUNG EINES ABGASNACHVERARBEITUNGSSYSTEMS
METHOD FOR LIMITING THE INTAKE AIR NOISE GENERATED AT THE END OF THE REGENERATION OF THE EXHAUST GASES POST-PROCESSING SYSTEM

(30) Priorité: 14.12.2006 FR 0655497
(43) Date de publication de la demande: 19.08.2009
(73) Titulaire: Renault SAS, 92100 Boulogne Billancourt (FR)
(72) Inventeur: DER MATHEOSSIAN, Jean-Yves, 75005 Paris (FR)
(86) Numéro de dépôt international: PCT/EP2007/063232
(87) Numéro de publication internationale: WO 2008/071591

(56) Documents cités:
- EP-A- 1 674 698
- EP-A- 1 679 430
- EP-A1- 1 106 804
- WO-A-03/102391

## Description

L'invention concerne un procédé de contrôle pour un moteur à combustion interne, en particulier un moteur Diesel, comprenant un système de post-traitement des gaz d'échappement et un système de recirculation des gaz d'échappement à l'admission, le moteur passant d'un fonctionnement en mode régénération avec vannage à un mode normal sans vannage.

Pour répondre aux normes antipollution, les moteurs à combustion interne sont dotés de systèmes de post-traitement qui permettent de piéger et de transformer certains composants chimiques contenus dans les gaz d'échappement. Certains systèmes de post-traitement utilisent une phase de régénération interne pendant laquelle le fonctionnement du moteur est modifié afin de placer le système de post-traitement dans des conditions thermiques et chimiques favorables. Ces conditions particulières favorisent la transformation des composants chimiques qui ont été piégés dans le système de post-traitement.

Ces conditions favorables sont généralement obtenues en dégradant le rendement du moteur par obturation partielle du circuit d'admission d'air, ce qui augmente, notamment, la température des gaz d'échappement.

La phase de régénération passée, on cherche à ouvrir le circuit d'admission d'air au plus vite pour limiter la surconsommation de carburant et la production transitoire de certains composants chimiques contenus dans les gaz d'échappement.

La demande de brevet EP1679430 présente un example de contôle moteur.

Cependant, pour des raisons d'efficacité, ces stratégies de régénération emploient des degrés d'obturation des conduits d'admission importants qui créent une diminution significative du bruit du circuit d'admission d'air pendant toute la durée du processus. A la fin de la régénération, en désobturant rapidement les conduits d'admission, le bruit redevient soudainement important sans que le conducteur ait modifié la consigne d'accélération du véhicule, ce qui nuit au confort sonore des occupants et risque de monopoliser leurs attention.

L'invention vise à améliorer les systèmes de l'art antérieur et se propose de remédier à leurs inconvénients, notamment de limiter le contraste de bruit perçu, notamment en régime stabilisé, au moment du retour à un fonctionnement normal du moteur après une phase de régénération.

C'est un objet de la présente invention que de proposer un procédé de contrôle de moteur du type précité comprenant une étape où l'on fait fonctionner temporairement le moteur en mode intermédiaire en réalisant un vannage partiel pour limiter le contraste de bruit à l'admission, à la fin du fonctionnement du moteur en mode régénération.

Suivant des modes particuliers de réalisation, le procédé de contrôle pour un moteur à combustion interne comporte l'une ou plusieurs des caractéristiques suivantes :
- on fait passer le moteur d'un fonctionnement en mode intermédiaire avec vannage partiel à un mode normal sans vannage lorsqu'au moins une consigne est détectée, ce qui permet de masquer le contraste de bruit à l'admission par le changement de bruit du moteur intervenant en liaison avec la détection de la consigne ;
- on fait passer le moteur d'un fonctionnement en mode intermédiaire avec vannage partiel à un mode normal sans vannage lorsqu'une consigne d'accélération est détectée, ce qui permet de masquer le contraste de bruit d'admission par le changement de bruit du moteur dû au changement de l'accélération ;
- on pilote la vitesse d'ouverture d'un volet d'admission lors de la commutation du mode régénération avec vannage au mode intermédiaire avec vannage partiel, ce qui permet d'optimiser la durée du mode intermédiaire ;
- dans une première phase d'ouverture du volet d'admission, on passe rapidement à une première valeur de vannage partiel correspondant à une première valeur d'atténuation du bruit d'admission, ce qui réduit la durée du mode intermédiaire;
- dans une deuxième phase d'ouverture du volet d'ouverture, on limite la vitesse d'ouverture du volet en fonction d'au moins une consigne de vitesse d'augmentation du bruit d'admission ;
- dans une troisième phase, on maintient la valeur de vannage partiel jusqu'à ce qu'une consigne d'accélération du véhicule soit appliquée, ce qui permet de s'assurer que les occupants ne percevront pas le contraste de bruit d'admission;
- on fait varier la vitesse d'ouverture du volet d'admission selon une fonction logarithmique pour que la vitesse de variation du bruit d'admission soit sensiblement constante;
- on réduit, durant le mode intermédiaire, la section d'un passage des gaz du système EGR pour diminuer le contraste du bruit total émis par le circuit d'admission, ce qui permet d'améliorer la réduction du contraste total du bruit d'admission ;
- on fait passer le moteur d'un fonctionnement en mode intermédiaire à un mode normal après un délai de temporisation, ce qui permet de s'assurer que l'on pourra revenir au mode normal plus économique après un certain délai prédéterminé ;
- on ajuste le délai de temporisation en fonction d'une valeur de consommation supplémentaire et/ou de production de certains composants chimiques pendant le mode intermédiaire.

D'autres caractéristiques et avantages de l'invention apparaîtront clairement à la lecture de la description suivante du mode de réalisation non limitatif de celle-ci, en liaison avec les dessins annexés sur lesquels :
- la figure 1 est un schéma structurel d'un moteur sur lequel est mis en oeuvre l'invention ;
- la figure 2 est un graphique présentant la valeur d'atténuation d'un bruit à l'admission obtenue en fonction de la fermeture du volet d'admission ;
- la figure 3 présente les variations de bruit à l'admission en fonction du temps pour plusieurs paramètres de vannage dans les différentes modes de fonctionnement du moteur selon un premier mode de réalisation ;
- la figure 4 présente les variations de bruit à l'admission en fonction du temps pour plusieurs paramètres de vannage dans les différents modes de fonctionnement du moteur selon un deuxième mode de réalisation.

Dans la description qui va suivre, il est entendu que le « vannage » désigne l'action de réduire la section de passage d'un gaz qui est introduit dans un conduit, par exemple un conduit d'admission d'air dans le moteur. Par ailleurs, on désigne par le « mode régénération », le mode de fonctionnement du moteur dans lequel une régénération interne des systèmes de post-traitement est réalisée avec un vannage. Un « mode normal » désigne un mode de fonctionnement du moteur dans lequel, aucune régénération ni aucun vannage ne sont réalisés. Enfin, un « mode intermédiaire » désigne un mode de fonctionnement du moteur dans lequel, un vannage partiel est réalisé.

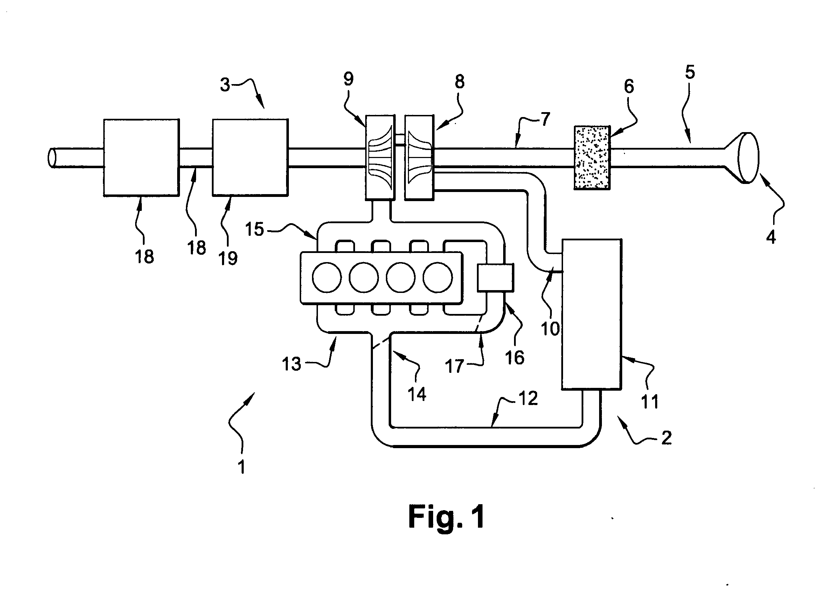

Sur la figure 1, est représentée la structure d'un moteur 1 sur lequel est mise en oeuvre l'invention.

Le moteur 1 comprend un circuit d'admission d'air 2 et un circuit d'échappement 3. Le circuit d'admission 2 présente une bouche d'admission d'air 4, par laquelle entre l'air qui est amené à un filtre à air 6 par un conduit d'admission amont du filtre à air 5. L'air poursuit son trajet, par un conduit amont de compresseur 7, jusqu'à un compresseur 8, entraîné par un turbocompresseur 9 mis en mouvement par des gaz d'échappement. L'air y est comprimé et envoyé vers un refroidisseur de suralimentation 11 via un conduit amont du refroidisseur 10. Après refroidissement, l'air est amené par un conduit situé en aval du refroidisseur 12 à un répartiteur d'air d'admission 13. Le débit d'air entrant dans le répartiteur 13 est alors modulé par un volet d'admission 14.

L'air admis dans le moteur 1 participe à la combustion interne produisant les gaz d'échappement qui sont rejetés dans le circuit d'échappement 3 par un collecteur d'échappement 15.

Une première portion des gaz d'échappement est recirculée à l'admission pour limiter l'émission de certains polluants par un circuit de recirculation des gaz d'échappement 16, dit « circuit EGR ». La quantité de gaz d'échappement recirculée est modulée par une vanne de fermeture du circuit de recirculation 17, dite « vanne EGR ».

Une deuxième portion des gaz d'échappement permet d'actionner le turbo 9 puis passe dans une ligne d'échappement 18 comprenant un système de post-traitement des gaz d'échappement 19.

Le fonctionnement du moteur 1 crée une excitation vibratoire qui se propage à l'intérieur du circuit d'admission d'air 2 et qui crée un bruit dit de « bouche » à l'admission. Au moment de la régénération des systèmes de post-traitement des gaz d'échappement 19, lorsqu'un volet d'admission d'air 14 ferme au moins en partie la section du circuit 2, la propagation de l'excitation vibratoire venant de l'amont est atténuée en aval du volet 14.

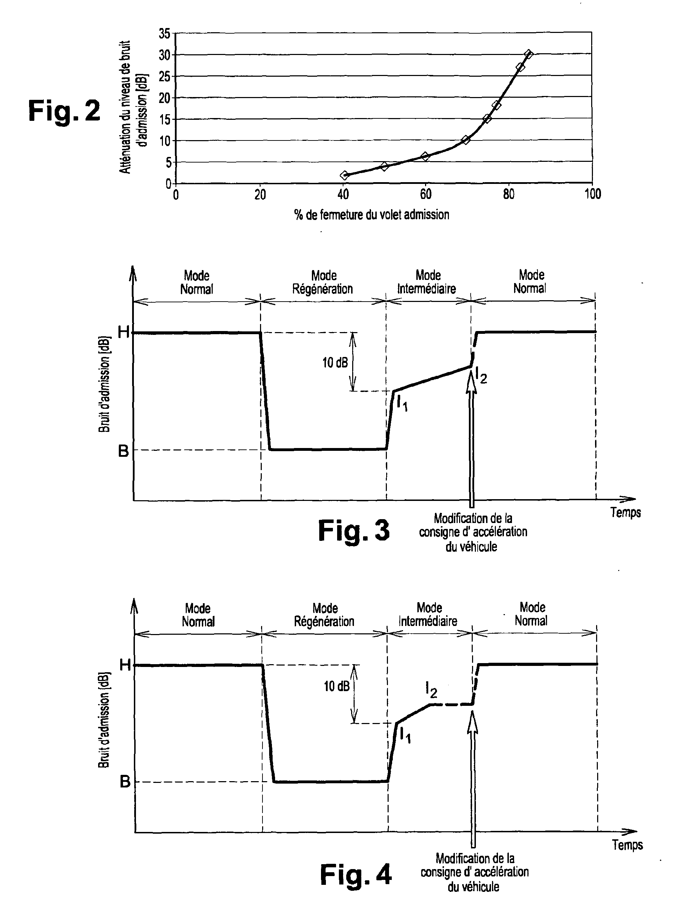

Comme représenté à la figure 2, l'atténuation du niveau de bruit de bouche à l'admission augmente avec le vannage à l'admission. Plus particulièrement, on peut observer, sur ce graphe, que le niveau d'atténuation du bruit d'admission suit une loi exponentielle en fonction du degré de fermeture du volet d'admission 14. Il est alors particulièrement avantageux de déplacer ce volet 14 suivant une loi de vitesse logarithmique afin que la vitesse d'augmentation du bruit de bouche soit linéaire.

Ce vannage permet aussi de diminuer, des bruits d'une intensité moins importante, en aval du volet d'admission 14, comme par exemple, les vibrations et le bruit produits par les composants du circuit d'admission 2 et le filtre à air 6.

Dans la suite de la description de l'invention, on parlera de bruit d'admission pour désigner le bruit de bouche ainsi que les vibrations et le bruit produits par les composants du circuit d'admission 2, et d'une manière générale toute excitation vibratoire qui se propage dans le circuit d'admission 2.

En fin de régénération, le volet 14 ouvre le circuit d'admission 2, le niveau de bruit d'admission augmente sensiblement. Cette augmentation est d'autant plus pénalisante que l'on ouvre le circuit 2 au plus vite pour revenir au mode normal et ainsi limiter la surconsommation et l'émission de certains polluants. La transition est alors nettement signalée aux occupants à la fin de la phase de régénération, affectant leur confort sonore.

Selon l'invention, on met alors, temporairement, le moteur dans un mode intermédiaire de fonctionnement, en fin de mode régénération avant de retourner à un mode normal sans vannage. Ce mode intermédiaire permet de limiter le contraste de bruit d'admission. On passe ensuite, du mode intermédiaire au mode normal, lorsqu'une consigne d'accélération est modifiée. Cette modification de consigne peut être aussi bien une consigne d'accélération qu'une consigne de décélération.

On peut aussi passer du mode intermédiaire au mode normal lorsqu'une consigne de changement de rapport de boîte de vitesse, manuelle ou automatique est détectée.

Il peut aussi être envisagé d'utiliser d'autres consignes correspondant à des changements de volumes sonores, tels que le volume d'autoradio ou une vitesse de ventilation par exemple.

Outre la réduction du contraste de bruit d'admission, le mode intermédiaire permet de limiter la surconsommation et l'émission de certains polluants par rapport au mode régénération. Cependant, ce mode intermédiaire reste moins avantageux en termes de consommation et de production de certains composants chimiques que le mode normal. On cherche donc à passer au mode normal, au plus tôt, lorsque les conditions permettent de s'assurer que les occupants ne seront pas gênés par un contraste de bruit important.

La figure 3 représente les variations de bruit à l'admission en fonction du temps pour plusieurs paramètres de vannage dans les différents modes de fonctionnement du moteur 1, selon un premier mode de réalisation. Les relevés sont réalisés pour un régime et à une charge du moteur 1 stabilisés.

Lorsque le moteur 1 fonctionne en mode normal, sans vannage, le niveau de bruit d'admission est important, et s'élève à une valeur H. En mode régénération, le niveau de bruit d'admission ne s'élève plus qu'à une valeur B. Une phase durant laquelle le moteur fonctionne dans un mode intermédiaire, durant lequel le vannage est partiel, est intercalée entre la fin mode régénération et le passage en mode normal. Durant ce mode intermédiaire, le niveau de bruit retourne progressivement de la valeur basse B à la valeur haute H.

Dans un premier temps suivant la fin du mode de régénération, le niveau de bruit varie rapidement pour revenir à une valeur I1 dont la différence de bruit avec B est inaudible par les occupants, ou autrement dit, la valeur I1 est une valeur seuil au-dessus de laquelle la vitesse de variation du niveau de bruit doit être limitée pour que le bruit ne soit pas perceptible par les occupants . Pour cela on désobture rapidement le circuit d'admission 2. Par exemple, cette valeur peut être égale à une valeur inférieure de 10dB à la valeur H. Ceci permet de limiter la durée dans laquelle le moteur fonctionne à des niveaux de surconsommation importants, tout en s'assurant que les occupants ne perçoivent, à l'oreille, la fin du mode régénération.

Dans un deuxième temps, on élève progressivement le niveau de bruit à partir de cette valeur I1 par le déplacement adapté du volet 14. On limite la vitesse de déplacement du volet 14 à une vitesse limite, au-delà, de laquelle l'occupant commence à percevoir une variation rapide du niveau de bruit d'admission.

Ce deuxième temps dure jusqu'à ce qu'une consigne d'accélération du véhicule soit détectée, à partir de laquelle le niveau de bruit augmente rapidement en accélérant le déplacement du volet 14. On parvient ainsi à dissimuler le contraste de bruit d'admission, par le changement de bruit perçu par l'occupant lors d'une modification de la consigne d'accélération du véhicule.

Selon un deuxième mode de réalisation, représenté à la figure 4, le mode intermédiaire dans lequel le moteur 1 fonctionne entre le mode régénération et le mode normal comprend des étapes supplémentaires par rapport au premier mode de réalisation. Les relevés sont réalisés pour un régime et une charge du moteur 1 stabilisés.

Dans un premier temps suivant la fin du mode de régénération, le niveau de bruit varie rapidement pour revenir à la valeur I1. La valeur I1 est une valeur seuil au-dessus de laquelle la vitesse de variation du niveau de bruit doit être limitée pour que le bruit ne soit pas perceptible par les occupants. Pour cela, on désobture rapidement le circuit d'admission 2. Par exemple, cette valeur peut être égale à une valeur inférieure de 10dB à la valeur H. Ceci permet de limiter la durée dans laquelle le moteur fonctionne à des niveaux de surconsommation importants, tout en s'assurant que les occupants ne perçoivent pas, à l'oreille, la fin du mode régénération.

Dans un deuxième temps, on élève progressivement le niveau de bruit à partir de cette valeur I1 par le déplacement adapté du volet 14 jusqu'à une valeur I2, qui est une deuxième valeur seuil. Cette valeur I2 est, par exemple, un niveau de bruit, associé à un réglage limité de la combustion au-delà duquel la surconsommation et la production de constituants chimiques par rapport au mode normal est acceptable.

Dans un troisième temps, on bloque le déplacement du volet d'admission 14, pour que le niveau de bruit d'admission reste constant et égal à I2.

Ce troisième temps perdure jusqu'à la détection d'une consigne d'accélération du véhicule, à partir de laquelle le niveau de bruit augmente rapidement en augmentant la vitesse de déplacement du volet 14. On parvient ainsi à dissimuler le contraste de bruit d'admission par le changement de bruit perçu par l'occupant lors d'une modification de la consigne d'accélération du véhicule.

Il ressort de ce qui précède que le système selon ce deuxième mode de réalisation présente de nombreux avantages, dans la mesure où l'écart entre les niveaux de bruit hauts H et bas B est très important et que la vitesse de variation du bruit d'admission est faible, ce qui entraîne un temps dans lequel on reste dans le mode intermédiaire très long pour le moteur.

Selon un troisième mode de réalisation, durant le mode intermédiaire, le vannage opéré au niveau du volet d'admission 14 entraîne une adaptation de la consigne d'ouverture de la vanne EGR 17 du circuit de recirculation 16.

En mode régénération, l'ouverture de la vanne EGR 17 est moins importante que son ouverture en mode normal. Quand cette vanne EGR 17 est ouverte, des excitations pulsées de l'échappement sont partiellement transmises vers le circuit d'admission 2. Il s'ensuit que pour certains points de fonctionnement du moteur 1, le circuit EGR 16 participe au contraste de bruit d'admission lors du passage du mode régénération au mode normal.

Lorsque le moteur fonctionne en mode intermédiaire, avec vannage partiel du volet d'admission 14, la proportion en air du mélange air-carburant qui participe à la combustion est moins élevée. La vanne EGR 17 présente alors une ouverture réduite par rapport au fonctionnement en mode normal, dans le but d'ajuster les proportions du mélange air-carburant et de limiter l'émission à l'échappement de certains composants chimiques.

Dans ce mode intermédiaire, la vanne EGR 17 est dans une position de vannage partiel qui diminue la participation du circuit EGR au contraste de bruit d'admission lors du passage du mode régénération au mode normal.

De plus, suivant l'invention, il est entendu que l'on ne se limite pas aux cas où les gaz EGR sont prélevés sur le collecteur d'échappement. Par exemple, il est possible de prélever les gaz du système EGR en aval d'un système de post-traitement des gaz d'échappement.

## Revendications

1. Procédé de contrôle pour un moteur à combustion interne (1) comprenant un système de post-traitement des gaz d'échappement (19) et un système de recirculation des gaz d'échappement à l'admission (16), le moteur (1) passant d'un fonctionnement en mode régénération avec vannage à un mode normal sans vannage dans lequel à la fin du fonctionnement du moteur (1) en mode régénération, ledit procédé comprend une étape où l'on fait fonctionner temporairement le moteur (1) en mode intermédiaire en réalisant un vannage partiel pour limiter le contraste de bruit à l'admission, une étape où l'on fait passer le moteur (1) d'un fonctionnement en mode intermédiaire avec vannage partiel à un mode normal sans vannage lorsqu'au moins une consigne est détectée **caractérisé en ce que** cette consigne est une consigne d'accélération.

2. Procédé de contrôle selon l'une des revendications précédentes **caractérisé en ce que** l'on pilote la vitesse d'ouverture d'un volet d'admission (14) lors de la commutation du mode régénération avec vannage au mode intermédiaire avec vannage partiel.

3. Procédé de contrôle selon la revendication précédente **caractérisé en ce que** dans une première phase d'ouverture du volet d'admission (14), on passe rapidement à une première valeur de vannage partiel correspondant à une première valeur d'atténuation du bruit d'admission.

4. Procédé de contrôle selon la revendication précédente **caractérisé en ce que** dans une deuxième phase d'ouverture du volet d'ouverture (14), on limite la vitesse d'ouverture du volet (14) en fonction d'au moins une consigne de vitesse d'augmentation du bruit d'admission.

5. Procédé de contrôle selon l'une des revendications précédente **caractérisé en ce que** dans une troisième phase, on maintient la valeur de vannage partiel jusqu'à ce qu'une consigne d'accélération du véhicule soit appliquée.

6. Procédé de contrôle selon la revendication 2 **caractérisé en ce que** l'on fait varier la vitesse d'ouverture du volet d'admission (14) selon une fonction logarithmique pour que la vitesse de variation du bruit d'admission soit sensiblement constante.

7. Procédé de contrôle selon l'une des revendications précédentes **caractérisé en ce que** l'on réduit, durant le mode intermédiaire, la section d'un passage des gaz du système EGR (16) pour diminuer le contraste du bruit total émis par le circuit d'admission (2).

8. Procédé de contrôle selon l'une des revendications précédentes **caractérisé en ce que** l'on fait passer le moteur (1) d'un fonctionnement en mode intermédiaire à un mode normal après un délai de temporisation.

## Claims

1. Control method for an internal combustion engine (1) comprising an exhaust gas post-treatment system (19) and a system for recirculating exhaust gases to the intake (16), the engine (1) changing from a regeneration mode operation with throttling to a normal mode without throttling in which, at the end of the regeneration mode operation of the engine (1), said method comprises a step in which the engine (1) is made to operate temporarily in intermediate mode by carrying out a partial throttling to reduce the intake noise contrast, a step in which the engine (1) is made to change from an intermediate mode operation with partial throttling to a normal mode without throttling when at least one signal is detected, **characterized in that** this signal is an acceleration signal.

2. Control method according to Claim 1, **characterized in that** the opening speed of an intake flap (14) is controlled when switching from the regeneration mode with throttling to the intermediate mode with partial throttling.

3. Control method according to the preceding claim, **characterized in that**, in a first opening phase of the intake flap (14), there is a rapid change to a first partial throttling value corresponding to a first intake noise attenuation value.

4. Control method according to the preceding claim, **characterized in that**, in a second opening phase of the intake flap (14), the opening speed of the flap (14) is limited according to at least one intake noise rate-of-increase signal.

5. Control method according to one of the preceding claims, **characterized in that**, in a third phase, the partial throttling value is maintained until an acceleration signal of the vehicle is applied.

6. Control method according to Claim 2, **characterized in that** the opening speed of the intake flap (14) is made to vary according to a logarithmic function so that the rate of variation of the intake noise is generally constant.

7. Control method according to one of the preceding claims, **characterized in that**, during the intermediate mode, the cross section of flow of the gases in the EGR system (16) is reduced to lessen the contrast of the total noise emitted by the intake circuit (2).

8. Control method according to one of the preceding claims, **characterized in that** the engine (1) is made to change from an intermediate mode operation to a normal mode after a timed period.

## Patentansprüche

1. Verfahren zur Kontrolle eines Verbrennungsmotors (1), der ein System zur Nachbehandlung der Abgase (19) und ein System zur Rückführung der Abgase zur Ansaugseite (16) enthält, wobei der Motor (1) von einem Betrieb im Regenerationsmodus mit Ventilbetätigung in einen Normalmodus ohne Ventilbetätigung übergeht, wobei am Ende des Betriebs des Motors (1) im Regenerationsmodus das Verfahren einen Schritt, in dem man den Motor (1) vorübergehend im Zwischenmodus arbeiten lässt, indem eine teilweise Ventilbetätigung durchgeführt wird, um den Ansauggeräuschkontrast zu begrenzen, und einen Schritt enthält, in dem man den Motor (1) von einem Betrieb im Zwischenmodus mit teilweiser Ventilbetätigung in einen Normalmodus ohne Ventilbetätigung übergehen lässt, wenn mindestens ein Sollwert erfasst wird, **dadurch gekennzeichnet, dass** dieser Sollwert ein Beschleunigungssollwert ist.

2. Kontrollverfahren nach Anspruch 1, **dadurch gekennzeichnet, dass** die Öffnungsgeschwindigkeit einer Ansaugklappe (14) beim Umschalten vom Regenerationsmodus mit Ventilbetätigung in den Zwischenmodus mit teilweiser Ventilbetätigung gesteuert wird.

3. Kontrollverfahren nach dem vorhergehenden Anspruch, **dadurch gekennzeichnet, dass** in einer ersten Öffnungsphase der Ansaugklappe (14) schnell auf einen ersten Wert teilweiser Ventilbetätigung übergegangen wird, der einem ersten Dämpfungswert des Ansauggeräuschs entspricht.

4. Kontrollverfahren nach dem vorhergehenden Anspruch, **dadurch gekennzeichnet, dass** in einer zweiten Öffnungsphase der Ansaugklappe (14) die Öffnungsgeschwindigkeit der Klappe (14) abhängig von mindestens einem Sollwert der Zunahmegeschwindigkeit des Ansauggeräuschs begrenzt wird.

5. Kontrollverfahren nach einem der vorhergehenden Ansprüche, **dadurch gekennzeichnet, dass** in einer dritten Phase der Wert teilweiser Ventilbetätigung aufrechterhalten wird, bis ein Beschleunigungssollwert des Fahrzeugs angewendet wird.

6. Kontrollverfahren nach Anspruch 2, **dadurch gekennzeichnet, dass** die Öffnungsgeschwindigkeit der Ansaugklappe (14) gemäß einer logarithmischen Funktion variiert wird, damit die Änderungsgeschwindigkeit des Ansauggeräuschs im Wesentlichen konstant ist.

7. Kontrollverfahren nach einem der vorhergehenden Ansprüche, **dadurch gekennzeichnet, dass** während des Zwischenmodus der Querschnitt eines Durchlasses der Gase des EGR-Systems (16) reduziert wird, um den Kontrast des vom Ansaugkreislauf (2) ausgegebenen Gesamtgeräuschs zu verringern.

8. Kontrollverfahren nach einem der vorhergehenden Ansprüche, **dadurch gekennzeichnet, dass** man den Motor (1) nach einer Verzögerungszeit von einem Betrieb im Zwischenmodus in einen Normalmodus übergehen lässt.
